# EUROPEAN PATENT APPLICATION

(11) **EP 2 075 109 A2**
(43) Date of publication of application: **01.07.2009**
(21) Application number: 08380070.6
(22) Date of filing: 07.03.2008
(51) Int. Cl.: B29C 65/08, B29C 65/60

(54) **System for integrating rivet nuts into plastic components**

(30) Priority: 28.12.2007 ES 200703465
(71) Applicant: Airbus España, S.L., 28906 Getafe (Madrid) (ES)
(72) Inventor: Avila Gutírrez, Adolfo, 28047 Madrid (ES); Fernández Vieira, Jesús, 28901 Getafe (Madrid) (ES)
(74) Representative: Ungria Lopez, Javier

(57) **Abstract**

The system is intended for fixing metal rivet nuts (1) to plastic components (2), achieving the fixing by means of ultrasound riveting or any other mechanical method. Each plastic component (1), made through the relevant manufacturing process, preferably by injection moulding, has a number of nipples (4) that are placed in the rivet nut holes (1). Riveting is subsequently carried out by ultrasound or other mechanical method on these nipples (4), fusing them and their corresponding union with the rivet nut (1) and in short, fixing the nut onto and integrating it into the plastic component (2). The riveting system referred to for integrating rivet nuts into plastic components creates a union between the rivet nuts and other components that are part of a structure. These other components can be metallic or non-metallic.

## Description

### OBJECTIVE OF THE INVENTION

The present invention, as stated in the heading of this descriptive report, refers to a system for integrating rivet nuts into plastic components. It is based on riveting by ultrasound or any other mechanical method, to avoid possible damage or cracking of the plastic components into which the rivet nuts are incorporated. These are intended to allow union with other components or fixing by means of screws to other components.

The system can be applied to all types of industry in which it is necessary or convenient to join plastic components to other components that may or may not be metallic. In particular, one of the preferred applications may be in the aeronautical sector.

### BACKGROUND TO THE INVENTION

The use of plastic materials to make structures or parts of structures is becoming increasingly common. They are used extensively in the aeronautical sector, where the combination of plastic and metal composites are seen to be beneficial in terms of their cost, their properties and for the possibilities offered by plastic.

In addition, the use of composite materials based on carbon fibre in structures has become widespread, as a consequence of their ability to provide a greater specific resistance and a better resistance to fatigue than metal.

For this reason, in many structures in industry, and specifically structures in the aeronautical sector, it is useful to use plastic components that are joined to other components, metal and non-metal, through the use of rivet nuts. This makes it possible to create non-structural joints that can be dismantled, in such a way that these rivet nuts remain solidly joined by means of studs to one of the components or parts to be fixed. This enormously facilitates the assembly and dismantling of the joint established between these components or parts.

Conventionally, the rivet nuts are fixed to one of the components or parts by means of metal studs, based on applying an axial force on the rivet, thereby producing the expansion of the shaft inside the hole in the component and forming a protuberance on the other side, at the opposite end from the original head of the rivet, the rivet nut thereby being secured to the other component to which it is joined or fixed.

It is very common for the rivet to become deformed inside plastic material causing damage to the material, such as the creation of cracks, making it necessary to throw away components, with the consequent loss of time and a notable increase in costs.

In addition, the use of metal studs makes it necessary to prime the ends of the rivets with an anti-corrosion coating, which involves additional costs to add to those referred to above.

### DESCRIPTION OF THE INVENTION

The system that is the object of the invention is intended to solve the problems and inconveniences referred to above. To do this, when riveting rivet nuts to pieces of plastic, instead of using metal studs, nipples that project from of the plastic component itself are used. These are introduced into the respective holes of the nut to be fixed. Riveting is then carried out by ultrasound, or by any other mechanical method that is appropriate.

That is to say, the invention consists of a new riveting process for fixing a metal rivet nut onto a component made of plastic. To achieve this, the corresponding injection mould for making the plastic component, or any other method or process of making the plastic component, is designed in such a way that the component produced has nipples that, in short, will constitute the studs in place of the traditional metal studs normally used.

By using the appropriate ultrasound welding machine, heat and pressure is applied to the nipples, after they have been introduced into and passed through the rivet nut holes. In this way the welding of these nipples to the rivet nuts is achieved, fixing them to the plastic component.

In this invention, riveting is based on the ultrasound welding technique, although in the riveting there is only fusion of one of the elements. The heat and pressure end of the tool or machine that carries out this riveting has a specific shape, namely a concave curve, so that on applying pressure and flattening the nipple this concave part shapes the heated and melted surplus material into the form of a cap, forming a joint analogous to a rivet.

On the basis of this system of ultrasound riveting, the cost of manufacturing the type of components referred to is reduced substantially, without affecting their functioning and without any negative effect, as the risk of damaging the plastic component that is associated with the mechanical deforming of the rivets is eliminated. In addition, conventional metal rivets are eliminated and so the subsequent application of an anti-corrosion coating is also eliminated, as this is a manual process that is not part of the standard process of plastic injection moulding fabrication.

The same results and advantages are obtained whether riveting is carried out by means of pressure and heat or by other appropriate mechanical methods.

However, it is significant that the use of rivet nuts made of plastic material leads to a loss in the reaction capacity of the tightening torque, as a consequence of the resistance of plastic materials being less than that of metals. This loss is produced when the section of the "plastic stud" is kept identical in size to the original metal rivet.

Therefore, to avoid this loss in the reaction capacity of the tightening torque and to achieve a component that is functionally equivalent, the rivet nut can be created in different ways. The following can be stated as the most important alternatives:
1. A special rivet nut is used, in which the diameter of the stud is over-sized in comparison with a metal stud, and suitable for the tightening torque and material required in each case, using for this a section of structurally equivalent material.
2. A standard rivet nut is used, in which case the receiving plastic component has additional means of support that influence the tightening torque. These additional means of support can be produced by a simple fixed projection either forming an integral part of the plastic component itself, or by moulding the plastic component, in such a way that in either case the additional means of support will be what supports the pair, the rivet nut being situated on it.

### BRIEF DESCRIPTION OF THE DRAWINGS

To complement the description that is given below, and with the objective of providing a better understanding of the characteristics of the invention, the present report is accompanied by a set of drawings by means of which the innovations and the advantages of the system that is the object of the invention can be understood more easily.
Figure 1.- Shows in detail a cross section of the fixing of a rivet nut to a plastic component, by means of the conventional riveting system; that is, by means of metal studs.
Figure 2.- Shows in detail a cross section of a plastic component with nipples projecting from it situated in the holes of a rivet nut in the position for being fixed by means of riveting carried out in accordance with the invention.
Figure 3.- Shows in detail a cross section of the riveting by means of ultrasound or other mechanical method, of the rivet nut into the plastic component represented in the previous figure.
Figure 4.- Shows in detail a cross section of the end of the tool by means of which the ultrasound riveting is carried out.
Figure 5.- Shows the same cross section in detail represented by the previous figure, with the shape that the end of the stud acquires when it has been riveted by ultrasound.
Figure 6.- Shows a perspective view of the arrangement of a standard rivet nut on a plastic component that has a projection to affect the tightening torque.

### DESCRIPTION OF THE PREFERRED EMBODIMENT FORM

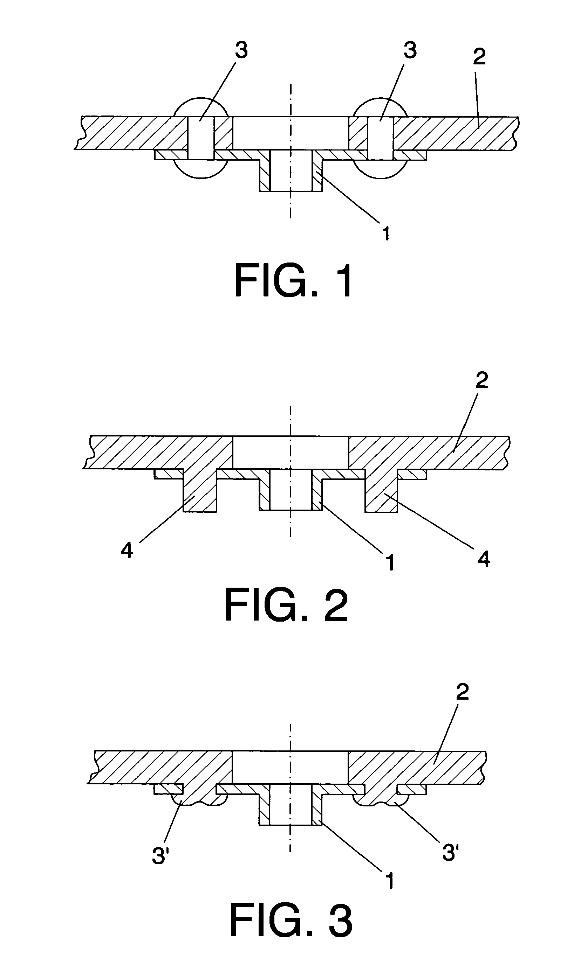

As can be seen in figure 1, the traditional system of carrying out the fixing of a rivet nut (1) to a piece of composite plastic (2), is achieved by conventional metal studs (3), it being necessary to provide anti-corrosion protection on the ends of these studs (3), as well as having the problem of possibly causing cracks in the plastic component (2) when the riveting operation is carried out.

So, to avoid these problems and inconveniences, the invention's system is based on carrying out riveting, preferably by ultrasound, as can be seen in figures (2) and (3), or by any other mechanical method that is appropriate. For this, the plastic component on which the rivet nut (1) is to be riveted is made with a number of nipples (4) formed as part of the manufacturing process of the plastic component (2), preferably by injection moulding. These nipples (4) are made to pass through the corresponding holes made for the purpose in the rivet nut (1). The riveting (3') is then carried out by ultrasound or other methods, as shown in figure 3.

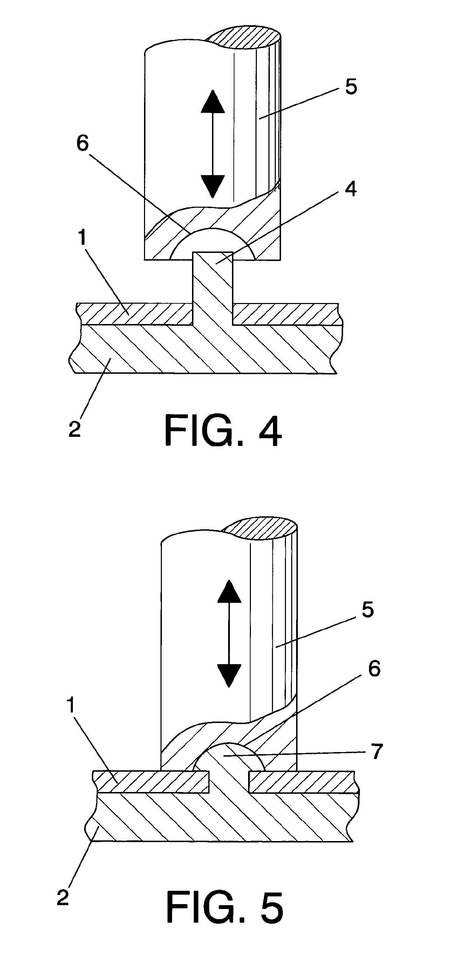

As can be seen in figures 4 and 5, the ultrasound riveting tool incorporates a part (5) by means of which heat and pressure are applied on the respective nipple (4) part (5) the end of which has a concave area (6) in which the surplus part of the melted and pressed nipple is collected, to form the end of the stud (7) into the shape of a cap, as can be clearly seen in figure 5.

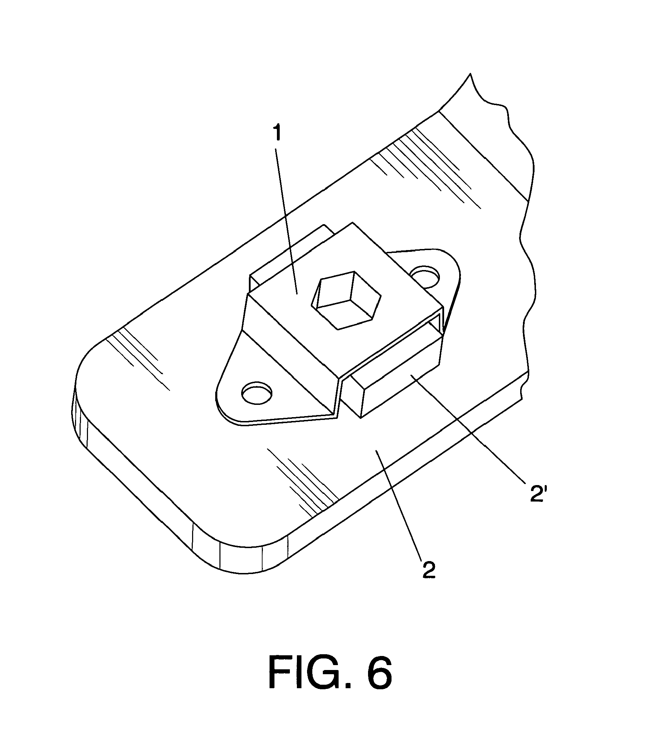

Finally, as can be seen in figure 6, to avoid a loss in the reaction capacity of the tightening torque, it is intended that when using a standard 1 rivet nut, the corresponding plastic component (2) will have a projection (2') that can be added to the component (2) or can form an integral part of it, positioning the rivet nut on top of this projection so that the tightening torque is supported by this projection (2'). This projection could also be created through moulding the plastic component (2) itself.

Clearly, instead of using a standard 1 rivet nut, it would be possible to use nipples designed to have a larger diameter than the equivalent metal rivet, in which case the possible loss in the reaction capacity of the tightening torque on the corresponding plastic component (2) would be solved.

## Claims

1. **A SYSTEM FOR INTEGRATING RIVET NUTS INTO PLASTIC COMPONENTS** to fix a metal rivet nut (1) to a plastic component (2), to thereby join this component to other components, metal or non-metal, and to form diverse structures, is **characterised by** the plastic component (2) that is made during the corresponding process of manufacturing, preferably by injection moulding, having a number of nipples (4) intended to be riveted onto the rivet nut (1), these nipples (4) previously being passed through the holes provided for them for this purpose in the rivet nut itself (1).

2. **A SYSTEM FOR INTEGRATING RIVET NUTS INTO PLASTIC COMPONENTS,** in accordance with claim 1, **characterised by** the rivet nut (1) having the diameter of an over-sized stud and suitable for the tightening torque and material required in each case.

3. **A SYSTEM FOR INTEGRATING RIVET NUTS INTO PLASTIC COMPONENTS,** in accordance with claim 1, **characterised by** the rivet nut (2) being standard, while the plastic component (2) incorporates an additional means of support that influences the tightening torque.

4. **A SYSTEM FOR INTEGRATING RIVET NUTS INTO PLASTIC COMPONENTS,** in accordance with claim 3, **characterised by** the additional means of support being able to be made in the form of a projection (2') of the plastic component itself (2).

5. **A SYSTEM FOR INTEGRATING RIVET NUTS INTO PLASTIC COMPONENTS,** in accordance with claim 3, **characterised by** the additional means of support being able to be made through moulding the plastic component itself (2).

6. **A SYSTEM FOR INTEGRATING RIVET NUTS INTO PLASTIC COMPONENTS,** in accordance with any of the above claims, **characterised by** the riveting being carried out by ultrasound.

7. **A SYSTEM FOR INTEGRATING RIVET NUTS INTO PLASTIC COMPONENTS,** in accordance with claim 6, **characterised by** the part (5) of the ultrasound machine used for applying heat and pressure on the nipples (4) of the plastic component (2), having a concave area (6) at the end by means of which one end of each stud (7) is formed into a cap after heating, pressure being applied and fusion occurring in each of the plastic component's (2) respective nipples (4).

8. **A SYSTEM FOR INTEGRATING RIVET NUTS INTO PLASTIC COMPONENTS,** in accordance with any of the above claims 1 to 5, **characterised by** riveting being carried out by mechanical means.
